(19) Europäisches Patentamt
European Patent Office
Office européen des brevets

(11) EP 0 507 819 B2

(12) NEUE EUROPÄISCHE PATENTSCHRIFT

(45) Veröffentlichungstag und Bekanntmachung des Hinweises auf die Entscheidung über den Einspruch:
**04.02.1998 Patentblatt 1998/06**

(45) Hinweis auf die Patenterteilung:
**06.10.1993 Patentblatt 1993/40**

(21) Anmeldenummer: **91901724.4**

(22) Anmeldetag: **11.12.1990**

(51) Int. Cl.$^6$: **B05D 7/26**, C09D 5/02

(86) Internationale Anmeldenummer:
**PCT/EP90/02148**

(87) Internationale Veröffentlichungsnummer:
**WO 91/09685 (11.07.1991 Gazette 1991/15)**

(54) **Verwendung eines Verfahrens zur Herstellung eines mehrschichtigen Überzuges**
Use of a process for producing a multi-layered coating
Utilisation d'un procédé pour la fabrication d'un revètement multicouche

(84) Benannte Vertragsstaaten:
**AT BE CH DE DK ES FR GB IT LI NL SE**

(30) Priorität: **23.12.1989 DE 3942804**

(43) Veröffentlichungstag der Anmeldung:
**14.10.1992 Patentblatt 1992/42**

(73) Patentinhaber:
**BASF Coatings Aktiengesellschaft**
**48165 Münster (DE)**

(72) Erfinder:
- **JOUCK, Walter, Dr.**
  **W-4400 Münster (DE)**
- **MAYER, Bernd, Dr.**
  **W-4400 Münster (DE)**
- **WIEDITZ, Stefan, Dr.**
  **Sylvania, OH 43560 (US)**

(74) Vertreter: **Fitzner, Uwe, Dr.**
**Dres. Fitzner & Christophersen,**
**Rechts- und Patentanwälte,**
**Kaiserswerther Str. 74**
**40878 Ratingen (DE)**

(56) Entgegenhaltungen:

| | |
|---|---|
| **EP-A- 0 287 144** | **EP-A- 0 332 011** |
| **EP-B- 38 127** | **EP-B- 447 428** |
| **DE-A- 3 814 853** | **DE-A- 3 841 540** |

- **Lehrbuch der Lacke und Beschichtungen, Bd.1, 1973, S. 686-687, 714-715**
- **Ullmanns Encyclopädie der technischen Chemie, Bd.19, 1980, S. 18**

EP 0 507 819 B2

**Beschreibung**

Die Erfindung betrifft die Verwendung eines mehrschichtigen schützenden und/oder dekorativen Überzugs auf einer Substratoberfläche, bei der

(1) als Basisbeschichtungszusammensetzung eine pigmentierte wäßrige Beschichtungszusammensetzung, die als filmbildendes Material ein wasserverdünnbares Emulsionspolymer enthält, auf die Substratoberfläche aufgebracht wird
(2) aus der in Stufe (1) aufgebrachten Zusammensetzung ein Polymerfilm gebildet wird
(3) auf der so erhaltenen Basischicht eine geeignete transparente Deckbeschichtungszusammensetzung aufgebracht wird und anschließend
(4) die Basischicht zusammen mit der Deckschicht bei Temperaturen von unter 100°C getrocknet wird.

Gegenstand der vorliegenden Erfindung ist auch die Verwendung eines mehrschichtigen schützenden und/oder dekorativen überzugs auf einer Substratoberfläche im Bereich der Autoreparaturlackierung, bei dem

(1) als Basisbeschichtungszusammensetzung eine pigmentierte wäßrige Beschichtungszusammensetzung, die als filmbildendes Material ein wasserverdünnbares Emulsionspolymer enthält, auf die Substratoberfläche aufgebracht wird
(2) aus der in Stufe (1) aufgebrachten Zusammensetzung ein Polymerfilm gebildet wird
(3) auf der so erhaltenen Basischicht eine geeignete transparente Deckbeschichtungszusammensetzung aufgebracht wird und anschließend
(4) die Basischicht zusammen mit der Deckschicht bei Temperaturen von unter 80 °C getrocknet wird.

Das oben beschriebene Verfahren zur Herstellung von mehrschichtigen schützenden und/oder dekorativen Überzügen ist bekannt und wird insbesondere zur Herstellung von Effektlackierungen auf Automobilkarosserien eingesetzt (vgl. z. B. EP-A-89497, DE-A-3 628 124 und EP-A-38 127).

Mit dem in Rede stehenden Verfahren können nur dann Metalleffektlackierungen mit einem guten Metalleffekt hergestellt werden, wenn die eingesetzten wäßrigen Basisbeschichtungszusammensetzungen so zusammengesetzt sind, daß sie in relativ dünnen, schnell und bei niedrigen Temperaturen von unter 100 °C trocknenden Schichten aufdas Substrat aufgebracht werden können und nach Durchführung der Verfahrensschritte (3) und (4) die Metallpigmentteilchen in paralleler Ausrichtung zur Substratoberfläche enthalten.

Außerdem müssen die wäßrigen Basisbeschichtungszusammensetzungen so zusammengesetzt sein, daß die Basisschicht der Metalleffektlackierung am Untergrund gut haftet und die transparente Deckschicht auf der Basisschicht gut haftet. Weiter müssen die wäßrigen Basisbeschichtungszusammensetzungen so zusammengesetzt sein, daß die getrocknete Metalleffektlackierung nach Belastung im Schwitzwasserkonstantklima keine Vermattung, Enthaftungsphänomene oder gar Bläschen zeigt.

Schließlich ist es wünschenswert, daß die wäßrigen Basisbeschichtungszusammensetzungen eine hohe Lagerstabilität zeigen. Außerdem müssen die einzelnen, u. U. wasserfrei gelagerten Bindemittel und/oder Lackbestandteile auch nach Lagerung noch homogen mischbar sein,

In der DE-A-3 628 124 werden wäßrige Basisbeschichtungszusammensetzungen offenbart, die als filmbildendes Material ein Gemisch aus einem wasserverdünnbaren Emulsionspolymer und einem wasserverdünnbaren Polyurethanharz enthalten.
Diese Basisbeschichtungszusammensetzungen erfüllen die oben dargelegten Anforderungen nicht in optimaler Weise, insbesondere bei Trocknungstemperaturen <100 °C.
Weiterhin ist aus der DE-PS 36 00 425 ein Verfahren zur Bildung von Überzügen bekannt, bei dem eine Grundstrichzusammensetzung und Deckschichtzusammensetzung aufgebracht werden und die Überzüge in einem Temperaturbereich zwischen Raumtemperatur und etwa 140 °C ausgehärtet werden. Der Grundstrich enthält dabei ein Harz in einem bestimmten Molekulargewichtsbereich mit einer Hydroxylgruppe oder mit einer Hydroxyl- und einer Carboxylgruppe im Molekül sowie ggf. einen Katalysator. Die Härterkomponente ist dabei im Deckstrich und nicht im Grundstrich enthalten.

Aus der EP-A-287144 ist ein Verfahren zur Bildung von mehrschichtigen Überzügen bekannt, bei dem die Basischicht eine Dispersion eines mittels eines 2-stufigen Verfahrens hergestellten Emulsionspolymers enthält. Bei diesem Verfahren werden in der ersten Stufe allerdings hohe Anteile von 65 bis 100 Mol-% von (Cyclo)alkylestern der (Meth)acrylsäure und ggf. der Fumar-und/oder Maleinsäure eingesetzt, wobei der (Cyclo)alkylrest 4 bis 12 C-Atome aufweist, wodurch die entstehenden Polymeren sehr niedrige Tg-Werte aufweisen. Weiterhin werden in der zweiten Stufe hohe Anteile von 10 bis 60 Mol-% (Meth)acrylsäure eingesetzt, wodurch die resultierenden Polymeren sehr hohe Säurezahlen aufweisen.

In der US-PS 4,150,005 werden wäßrige Beschichtungszusammensetzungen offenbart, die ein wasserverdünnbares Emulsionspolymer enthalten, das erhältlich ist, indem in einer ersten Emulsionspolymerisationsstufe ein stark hydrophiles Polymer mit einer niedrigen Glasübergangstemperatur hergestellt wird und in dessen Gegenwart in einer zweiten Emulsionspolymerisationsstufe ein hydrophobes Polymer mit einer hohen Glasübergangstemperatur hergestellt wird. Mehrschichtige schützende und/oder dekorative Überzüge der oben beschriebenen Art und die bei der Herstellung dieser Überzüge auftretenden Probleme werden in der US-PS-4,150,005 nicht angesprochen.

In der GB-A-2,034,334 werden wäßrige Beschichtungszusammensetzungen beschrieben, die ein wasserverdünnbares, über ein zweistufiges Emulsionspolymerisationsverfahren erhältliches Emulsionspolymer enthalten, das zwingend N-Methylolgruppen aufweisen muß. Der GB-A-2,034,334 sind keine Hinweise darauf zu entnehmen, daß die beiden Polymerstufen sich in ihren Glasübergangstemperaturen in der erfindunsgemäßen Art und Weise unterscheiden müssen. Mehrschichtige schützende und/oder dekorative Überzüge der oben beschriebenen Art und die bei der Herstellung dieser Überzüge auftretenden Probleme werden in der GB-A-2,034,334 nicht angesprochen.

In der EP-A-332 011 werden wäßrige Beschichtungszusammensetzungen offenbart, die als Holzlacke verwendbar sind und die ein hydroxylgruppenfreies, über ein zweistufiges Emulsionspolymerisationsverfahren erhältliches, wasserverdünnbares Emulsionspolymer enthalten.

Schließlich ist in der Patentanmeldung DE 38 41 540 ein Verfahren beschrieben, bei dem ebenfalls eine wasserverdünnbare Basisschicht und nach einer kurzen Ablüftzeit eine Deckbeschichtungszusammensetzung aufgebracht wird. Dieses Verfahren unterscheidet sich von der vorliegenden Erfindung dadurch, daß bei dem Verfahren der DE 38 41 540 die Basischicht zusammen mit der Deckschicht bei Temperaturen von mehr als 100 °C eingebrannt wild. Außerdem enthalten die dort beschriebenen Basisbeschichtungszusammensetzungen vorteilhafterweise ein Aminoplast harz, während bei dem vorliegenden Verfahren die Basisbeschichtungszusammensetzungen vorteilhafterweise gerade kein Aminoplastharz enthalten.

Die der vorliegenden Erfindung zugrundeliegende Aufgabenstellung besteht darin, geeignete wäßrige Basisbeschichtungszusammensetzungen bereitzustellen, die die oben dargelegten Anforderungen optimal erfüllen.

Diese Aufgabe wird überraschenderweise durch wäßrige Basisbeschichtungszusammensetzungen gelöst, die ein wasserverdünnbares Emulsionspolymer enthalten, das erhältlich ist, indem

(a) in einer ersten Stufe 10 bis 90 Gewichtsteile eines ethylenisch ungesättigten Monomeren oder eines Gemisches aus ethylenisch ungesättigten Monomeren in wäßriger Phase in Gegenwart eines oder mehrerer Emulgatoren und eines oder mehrerer radikalbildender Initiatoren polymerisiert werden, wobei das ethylenisch ungesättigte Monomer bzw. das Gemisch aus ethylenisch ungesättigten Monomeren so ausgewählt wird, daß in der ersten Stufe ein Polymer mit einer Glasübergangstemperatur ($T_{G1}$) von +30 bis + 110 °C erhalten wird und

(b) nachdem mindestens 80 Gew.-% des in der ersten Stufe eingesetzten ethylenisch ungesättigten Monomers bzw. Monomerengemisches umgesetzt worden sind, in einerzweiten Stufe 90 bis 10 Gewichtsteile eines ethylenisch ungesättigten Monomeren oder eines Gemisches aus ethylenisch ungesättigten Monomeren in Gegenwart des in der ersten Stufe erhaltenen Polymers polymerisiert werden, wobei das in der zweiten Stufe eingesetzte Monomer bzw. das in der zweiten Stufe eingesetzte Gemisch aus ethylenisch ungesättigten Monomeren so ausgewählt wird, daß eine alleinige Polymerisation des in der zweiten Stufe eingesetzten Monomers bzw. des in der zweiten Stufe eingesetzten Gemisches aus ethylenisch ungesättigten Monomeren zu einem Polymer mit einer Glasübergangstemperatur ($T_{G2}$) von - 60 bis + 20°C führen würde und wobei die Reaktionsbedingungen so gewählt werden, daß das erhaltene Emulsionspolymer eine zahlenmittlere Molmasse von 200.000 bis 2.000.000 aufweist und wobei das in derersten Stufe eingesetzte ethylenisch ungesättigte Monomer bzw. Monomerengemisch und das in derzweiten Stufe eingesetzte ethylenisch ungesättigte Monomer bzw. Monomerengemisch in Art und Menge so ausgewählt werden, daß das erhaltene Emulsionspolymer eine Hydroxylzahl von 2 bis 100 mgKOH/g aufweist und die Differenz $T_{G1}$ - $T_{G2}$ 10 bis 170°C beträgt.

Die erfindungsgemäß eingesetzten wasserverdünnbaren Emulsionspolymere sind durch eine zweistufige Emulsionspolymerisation in einem wäßrigen Medium in den bekannten Apparaturen, beispielsweise in einem Rührkessel mit Heiz- und Kühlvorrichtung, herstellbar. Die Zugabe der Monomeren kann in der Weise erfolgen, daß eine Lösung aus dem gesamten Wasser, dem Emulgator und einem Teil des Initiators vorgelegt wird und das Monomer bzw. Monomerengemisch und getrennt davon, aber parallel dazu der Rest des Initiators bei der Polymerisationstemperatur langsam zugegeben wird. Es ist jedoch auch möglich, einen Teil des Wassers und des Emulgators vorzulegen und aus dem Rest des Wassers und des Emulgators und aus dem Monomer bzw. Monomerengemisch eine Voremulsion herzustellen, die bei der Polymerisationstemperatur langsam zugegeben wird, wobei der Initiator wiederum getrennt zugegeben wird.

Es ist bevorzugt, in der ersten Stufe das Monomer bzw. Monomerengemisch in Form einer Voremulsion zuzugeben und in der zweiten Stufe das Monomer bzw. Monomerengemisch in Substanz, d.h. ohne Wasser und Emulgator zuzugeben und den Initiator getrennt, aber parallel dazu zuzugeben. Es ist besonders bevorzugt, in der ersten Stufe aus einem Teil (in der Regel etwa 30 Gew.-% der insgesamt einzusetzenden Voremulsion) der in der ersten Stufe einzusetzenden Voremulsion zuerst ein Saatpolymer herzustellen und danach den Rest der in der ersten Stufe einzusetzenden Voremulsion zuzugeben.

Die Polymerisationstemperatur liegt im allgemeinen im Bereich von 20 bis 100°C, vorzugsweise 40 bis 90°C.

Das Mengenverhältnis zwischen den Monomeren und dem Wasser kann so ausgewählt werden, daß die resultierende Dispersion einen Feststoffgehalt von 30 bis 60 Gew.-%, vorzugsweise 35 bis 50 Gew.-% aufweist.

Als Emulgator wird vorzugsweise ein anionischer Emulgator allein oder im Gemisch eingesetzt.

Beispiele für anionische Emulgatoren sind die Alkalisalze von Schwefelsäurehalbestern von Alkylphenolen oder Alkoholen, ferner die Schwefelsäurehalbester von oxethylierten Alkylphenolen oder oxethylierten Alkoholen, vorzugsweise die Alkalisalze des Schwefelsäurehalbesters eines mit 4 - 5 Mol Ethylenoxid pro Mol umgesetzten Nonylphenols, Alkyl- oder Arylsulfonats, Natriumlaurylsulfat, Natriumlaurylethoxilatsulfat und sekundäre Natriumalkansulfonate, deren Kohlenstoffkette 8 - 20 Kohlenstoffatome enthält. Die Menge des anionischen Emulgators beträgt 0,1 - 5,0 Gew.-%, bezogen auf die Monomeren, vorzugsweise 0,5 - 3,0 Gew.-%. Ferner kann zur Erhöhung der Stabilität der wässrigen Dispersionen zusätzlich ein nichtionischer Emulgator vom Typ eines ethoxilierten Alkylphenols oder Fettalkohols, z.B. ein Additionsprodukt von 1 Mol Nonylphenol und 4 - 30 Mol Ethylenoxid in Mischung mit dem anionischen Emulgator eingesetzt werden.

Als radikalbildender Initiator wird vorzugsweise eine Peroxidverbindung eingesetzt. Der Initiator ist wasserlöslich oder monomerlöslich. Vorzugsweise wird ein wasserlöslicher Initiator verwendet.

Als Initiatoren eignen sich die üblichen anorganischen Perverbindungen, wie Ammoniumpersulfat, Kaliumpersulfat, Ammonium- oder Alkalimetallperoxidiphosphat und organische Peroxide, wie z.B. Benzoylperoxid, organische Perester, wie Perisopivalat, zum Teil in Kombination mit Reduktionsmitteln, wie Natriumdisulfit, Hydrazin, Hydroxylamin und katalytische Mengen Beschleuniger, wie Eisen-, Kobalt-, Cer- und Vanadylsalze. Vorzugsweise eingesetzt werden Alkali- bzw. Arnmoniumperoxidisulfate. Es können auch die Redox-Initiatorsysteme, die in der EP-A-107300 offenbart werden, eingesetzt werden.

In der ersten Stufe werden 10 bis 90, vorzugsweise 35 bis 65 Gewichtsteile eines ethylenisch ungesättigten Monomeren oder eines Gemisches aus ethylenisch ungesättigten Monomeren emulsionspolymerisiert. Das in der ersten Stufe eingesetzte Monomer bzw. Monomerengemisch wird so ausgewählt, daß bei völliger Auspolymerisation des in der ersten Stufe eingesetzten Monomers bzw. Monomerengemisches ein Polymer mit einer Glasübergangstemperatur ($T_{G1}$) von + 30°C bis + 110°C, vorzugsweise 60 bis 95°C erhalten wird. Da die Glasübergangstemperatur von Emulsionspolymeren nach der Gleichung

$$\frac{1}{T_G} = \sum_{n=1}^{n=x} \frac{Wn}{T_Gn}$$

$T_G$ = Glasübergangstemp. des Copolymers in K
$W_n$ = Gewichtsanteil des n-ten Monomers
$T_{Gn}$ = Glasübergangstemp. des Homopolymers aus dem n-ten Monomer
x = Anzahl der verschiedenen Monomeren

näherungsweise berechnet werden kann, bereitet es dem Fachmann keine Probleme, das in der ersten Stufe einzusetzende Monomer bzw. Monomerengemisch so auszuwählen, daß bei völliger Auspolymerisation des in der ersten Stufe eingesetzten Monomers bzw. Monomerengemisches ein Polymer mit einer Glasübergangstemperatur ($T_{G1}$) von + 30 bis + 110°C, vorzugsweise 60 bis 95°C erhalten wird.

Als Beispiele für Monomere, die in der ersten Stufe eingesetzt werden können, werden genannt: vinylaromatische Kohlenwasserstoffe, wie Styrol, α-Alkylstyrol und Vinyltoluol, Ester der Acrylsäure oder Methacrylsäure, insbesondere aliphatische und cycloaliphatische Acrylate oder Methacrylate mit bis zu 20 Kohlenstoffatomen im Alkoholrest, wie z.B. Methyl-, Ethyl-, Propyl-, Butyl-, Hexyl-, Ethylhexyl-, Stearyl-, Lauryl- und Cyclohexylacrylat oder -methacrylat, Acryl- und/oder Methacrylsäure, Acryl- und/oder Methacrylamid, N-Methylolacrylamid und/oder N-Methylolmethacrylamid, Hydroxialkylester der Acrylsäure, Methacrylsäure oder einer anderen α,β-ethylenisch ungesättigten Carbonsäure, wie z.B. 2-Hydroxiethylacrylat, 2-Hydroxipropylacrylat, 3-Hydroxipropylacrylat, 2-Hydroxipropylmethacrylat, 3-Hydroxipropylmethacrylat, 2-Hydroxiethylmethacrylat, 4-Hydroxibutylacrylat, 4-Hydroxibutylmethacrylat usw.

In der ersten Stufe werden vorzugsweise ethylenisch ungesättigte Monomere bzw. Gemische aus ethylenisch ungesättigten Monomeren eingesetzt, die im wesentlichen frei von Hydroxyl und Carboxylgruppen sind. "Im wesentlichen frei" soll bedeuten, daß es bevorzugt ist, Monomere bzw. Monomerengemische einzusetzen, die frei von Hydroxyl- und Carboxylgruppen sind, daß die eingesetzten Monomere bzw. Monomerengemische aber auch geringe Mengen (z.B. infolge von Verunreinigungen) an Hydroxyl- und/oder Carboxylgruppen enthalten können. Der Gehalt an Hydroxyl- und Carboxylgruppen sollte vorzugsweise höchstens so hoch sein, daß ein aus dem in der ersten Stufe eingesetzten Monomer bzw. Monomerengemisch hergestelltes Polymer eine OH-Zahl von höchstens 5 mg KOH/g und eine Säurezahl von höchstens 3 mg KOH/G aufweist. In der ersten Stufe wird besonders bevorzugt ein Gemisch aus

(a1) 100 bis 60, vorzugsweise 99,5 bis 75 Gew.-% eines cycloaliphatischen oder aliphatischen Esters der Methacrylsäure oder Acrylsäure oder eines Gemisches aus solchen Estern und

(a2) 0 bis 40, vorzugsweise 0,5 bis 25 Gew.-% eines mit (a1) copolymerisierbaren Monomeren oder eines Gemisches aus solchen Monomeren

eingesetzt, wobei die Summe der Gewichtsanteile von (a1) und (a2) stets 100 Gew.-% ergibt.

Als Komponente (a1) können z.B. eingesetzt werden: Cyclohexylacrylat, Cyclohexylmethacrylat, Alkylacrylate und Alkylmethacrylate mit bis zu 20 Kohlenstoffatomen im Alkylrest, wie z.B. Methyl-, Ethyl-, Propyl-, Butyl-, Hexyl-, Ethylhexyl-, Stearyl- und Laurylacrylat und -methacrylat oder Gemische aus diesen Monomeren.

Als Komponente (a2) können z.B. eingesetztwerden vinylaromatische Kohlenwasserstoffe, wie Styrol, -Alkylstyrol und Vinyltoluol, Acryl- und Methacrylamid und Acryl- und Methacrylnitril oder Gemische aus diesen Monomeren.

Nachdem mindestens 80 Gew.-%, vorzugsweise mindestens 95 Gew.-% des in der ersten Stufe eingesetzten ethylenisch ungesättigten Monomers bzw. Monomerengemisches umgesetzt worden sind, werden in einer zweiten Stufe 90 bis 10, vorzugsweise 65 bis 35 Gewichtsteile eines ethylenisch ungesättigten Monomeren oder eines Gemisches aus ethylenisch ungesättigten Monomeren in Gegenwart des in der ersten Stufe erhaltenen Polymers emulsionspolymerisiert, wobei das in der zweiten Stufe eingesetzte Monomer bzw. Monomerengemisch so ausgewählt wird, daß eine alleinige Polymerisation des in derzweiten Stufe eingesetzten Monomers bzw. Monomerengemisches zu einem Polymer mit einer Glasübergangstemperatur ($T_{G2}$) von -60 bis +20°C, vorzugsweise -50 bis 0°C führen würde. Diese Auswahl bereitet dem Fachmann keine Schwierigkeiten, da die Glasübergangstemperaturen von Emulsionspolymeren - wie oben bereits dargelegt - leicht näherungsweise berechnet werden können.

Es ist weiter erfindungswesentlich, daß das in der ersten Stufe eingesetzte Monomer bzw. Monomerengemisch und das in der zweiten Stufe eingesetzte Monomer bzw. Monomerengemisch in der Art und Menge so ausgewählt werden, daß das erhaltene Emulsionspolymer eine Hydroxylzahl von 2 bis 100 mg KOH/g, vorzugsweise von 10 bis 50 mg KOH/g aufweist und die Differenz $T_{G1}$ - $T_{G2}$ 10 bis 170 °C, vorzugsweise 80 bis 150°C beträgt.

Als Beispiele für Monomere, die in der zweiten Stufe eingesetzt werden können, werden genannt: vinylaromatische Kohlenwasserstoffe, wie Styrol, α-Alkylstyrol und Vinyltoluol, Ester der Acrylsäure oder Methacrylsäure, insbesondere aliphatische und cycloaliphatische Acrylate oder Methacrylate mit bis zu 20 Kohlenstoffatomen im Alkoholrest, wie z.B. Methyl-, Ethyl-, Propyl-, Butyl-, Hexyl-, Ethylhexyl-, Stearyl-, Lauryl- und Cyclohexylacrylat oder -methacrylat, Acryl- und/oder Methacrylsäure, Acryl- und/oder Methacrylamid, N-Methylolacrylamid und/oder N-Methylolmethacrylamid, Hydroxialkylester der Acrylsäure, Methacrylsäure oder einer anderen α,β-ethylenisch ungesättigten Carbonsäure, wie z.B. 2-Hydroxiethylacrylat, 2-Hydroxipropylacrylat, 3-Hydroxipropylacrylat, 2-Hydroxipropylmethacrylat, 3-Hydroxipropylmethacrylat, 2-Hydroxiethylmethacrylat, 4-Hydroxibutylacrylat, 4-Hydroxibutylmethacrylat usw. In der zweiten Stufe wird vorzugsweise ein Gemisch aus

(b1) 47 bis 99, vorzugsweise 75 bis 90 Gew.-% eines cycloaliphatischen oder aliphatischen Esters der Methacrylsäure oder Acrylsäure oder eines Gemisches aus solchen Estern

(b2) 1 bis 20, vorzugsweise 5 bis 15 Gew.-% eines mindestens eine Hydroxylgruppe tragenden mit (b1),

(b3) und (b4) copolymerisierbaren Monomeren oder eines Gemisches aus solchen Monomeren

(b3) 0 bis 8, vorzugsweise 2 bis 6 Gew.-% eines mindestens eine Carboxyl- oder Sulfonsäuregruppe tragenden, mit (b1), (b2) und (b4) copolymerisierbaren Monomeren oder eines Gemisches aus solchen Monomeren und

(b4) 0 bis 25, vorzugsweise 2 bis 15 Gew.-% eines weiteren mit (b1), (b2) und (b3) copolymerisierbaren Monomeren oder eines Gemisches aus solchen Monomeren

eingesetzt, wobei die Summe der Gewichtsanteile von (b1), (b2), (b3) und (b4) stets 100 Gew. % ergibt.

Als Komponente (b1) können z.B. eingesetzt werden: Cyclohexylacrylat, Cyclohexylmethacrylat. Alkylacrylate und Alkylmethacrylate mit bis zu 20 Kohlenstoffatomen im Alkylrest, wie z.B. Methyl-, Ethyl-, Propyl-, Butyl-, Hexyl-, Ethylhexyl, Stearyl- und Laurylacrylat und -methacrylat oder Gemische aus diesen Monomeren.

Als Komponente (b2) können z.B. eingesetzt werden: Hydroxialkylester der Acrylsäure, Methacrylsäure oder einer anderen ethylenisch ungesättigten Carbonsäure. Diese Ester können sich von einem Alkylenglykol ableiten, das mit der Säure verestert ist, oder sie können durch Umsetzung der Säure mit einem Alkylenoxid erhalten werden. Als Komponente (b2) werden vorzugsweise Hydroxialkylester der Acrylsäure und Methacrylsäure, in denen die Hydroxialkylgruppe bis zu 4 Kohlenstoffatome enthält, oder Mischungen aus diesen Hydroxialkylestern eingesetzt. Als Beispiele für derartige Hydroxialkylester werden 2-Hydroxiethylacrylat, 2-Hydroxipropylacrylat, 3-Hydroxipropylacrylat, 2-Hydroxipropylmethacrylat, 3-Hydroxipropylmethacrylat, 2-Hydroxiethylmethacrylat, 4-Hydroxibutylacrylat oder 4-Hydroxibutylmethacrylat genannt. Entsprechende Ester von anderen ungesättigten Säuren, wie z.B. Ethacrylsäure, Crotonsäure und ähnliche Sauren mit bis zu etwa 6 Kohlenstoffatomen pro Molekül können auch eingesetzt werden.

Als Komponente (b3) werden vorzugsweise Acrylsäure und/oder Methacrylsäure und/oder Acrylamidomethylpropansulfonsäure eingesetzt. Es können aber auch andere ethylenisch ungesättigte Säuren mit bis zu 6 Kohlenstoffatomen im Molekül eingesetzt werden. Als Beispiele für solche Säuren werden Ethacrylsäure, Crotonsäure, Maleinsäure, Fumarsäure und Itaconsäure genannt.
Als Komponente (b4) können z.B. eingesetzt werden: vinylaromatische Kohlenwasserstoffe, wie Styrol, α-Alkylstyrol und Vinyltoluol, Acryl- und Methacrylamid und Acryl- und Methacrylnitril oder Gemische aus diesen Monomeren.

Das erfindungsgemäß eingesetzte Emulsionspolymer sollte eine zahlenmittlere Molmasse (Bestimmung: gelpermeationschromatographisch mit Polystyrol als Standard) von 200.000 bis 2.000.000, vorzugsweise von 300.000 bis 1.500.000 sowie üblicherweise Säurezahlen von unter 100 mg KOH/g und OH-Zahlen von 2 bis 100 mg KOH/g aufweisen. Enthält das Emulsionspolymer dabei keine oder nur sehr wenige Säuregruppen (Säurezahl etwa unterhalb von 3 mg KOH/g), so ist es vorteilhaft, der Beschichtungszusammensetzung ein carboxylgruppenhaltiges Harz, beispielsweise ein carboxylgruppenhaltiges Polyurethan-, Polyester- oder Polyacrylatharz zuzusetzen. Die Mengen des carboxylgruppenhaltigen Harzes sind dabei so zu wählen, daß die Säurezahl der Mischung aus Emulsionspolymer und carboxylgruppenhaltigem Harz größer gleich 10 mg KOH/g ist.

Dem Fachmann ist bekannt, wie er die Reaktionsbedingungen während der Emulsionspolymerisation zu wählen hat, damit er Emulsionspolymere erhält, die die oben angegebenen zahlenmittleren Molmassen aufweisen (vgl. z.B. Chemie, Physik und Technologie der Kunststoffe in Einzeldarstellungen, Dispersionen synthetischer Hochpolymerer, Teil 1 von F. Hölscher, Springer Verlag, Berlin, Heidelberg, New York, 1969).

Die erfindungsgemäßen wäßrigen Basisbeschichtungszusammensetzungen können neben dem oben beschriebenen Emulsionspolymer noch ein wasserverdünnbares Polyurethanharz als filmbildendes Material enthalten.

Die erfindungsgemäßen Basisbeschichtungszusammensetzungen können z.B.ggf. noch wasserverdünnbare, Harnstoffgruppen enthaltende Polyurethanharze enthalten, die ein zahlenmittleres Molekulargewicht (Bestimmung: gelpermeationschromatographisch mit Polystyrol als Standard) von 1000 bis 25.0000, vorzugsweise 1500 bis 20.000 und eine Säurezahl von 5 bis 70 mg KOH/g, vorzugsweise 10 bis 30 mg KOH/g aufweisen und durch Umsetzung, vorzugsweise Kettenverlängerung von Isocyanatgruppen aufweisenden Pra`polymeren mit Polyaminen und/oder Hydrazin herstellbar sind.

Die Herstellung des isocyanatgruppenhaltigen Präpolymeren kann durch Reaktion von Polyalkoholen mit einer Hydroxylzahl von 10 bis 1800, bevorzugt 50 bis 500 mg KOH/g, mit überschüssigen Polyisocyanaten bei Temperaturen bis zu 150°C, bevorzugt 50 bis 130°C, in organischen Lösemitteln, die nicht mit Isocyanaten reagieren können, erfolgen. Das Äquivalenzverhältnis von NCO- zu OH-Gruppen liegt zwischen 1,5 zu 1,0 und 1,0 zu 1,0, bevorzugt zwischen 1,4 und 1,2 zu 1. Die zur Herstellung des Präpolymeren eingesetzten Polyole können niedrigmolekular und/oder hochmolekular sein und sie können reaktionsträge anionische Gruppen enthalten.

Um die Härte des Polyurethans zu erhöhen, kann man niedrigmolekulare Polyole einsetzen. Sie haben ein Molekulargewicht von 60 bis zu etwa 400, und können aliphatische, alicyclische oder aromatische Gruppen enthalten. Es werden dabei Mengen bis zu 30 Gew.-% der gesamten Polyol-Bestandteile, bevorzugt etwa 2 bis 20 Gew.-% eingesetzt. Vorteilhaft sind die niedermolekularen Polyole mit bis zu etwa 20 Kohlenstoffatomen je Molekül, wie Ethylenglykol, Diethylenglykol, Triethylenglykol, 1,2-Propandiol, 1,3-Propandiol, 1,4-Butandiol, 1,2-Butylenglykol, 1,6-Hexandiol, Trimethilolpropan, Rizinusöl oder hydriertes Rizinusöl, Di-trimethylolpropanether, Pentaerythrit, 1,2-Cyclohexandiol, 1,4-Cyclohexandimethanol, Bisphenol A, Bisphenol F, Neopentylglykol, Hydroxipivalinsäureneopentylglykolester, hydroxiethyliertes oder hydroxipropyliertes Bisphenol A, hydriertes Bisphenol A und deren Mischungen.
Um ein NCO-Präpolymeres hoher Flexibilität zu erhalten, sollte ein hoher Anteil eines überwiegend linearen Polyols mit einer bevorzugten Hydroxylzahl von 30 bis 150 mg KOH/g zugesetzt werden. Bis zu 97 Gew.-% des gesamten Polyols können aus gesättigten und ungesättigten Polyestern und/oder Polyethern mit einer Molmasse Mn von 400 bis 5000 bestehen. Als hochmolekulare Polyole sind geeignet aliphatische Polyetherdiole der allgemeinen Formel $H-(-0-(CHR)_n-)_m-OH$ in der R = Wasserstoff oder ein niedriger, gegebenenfalls mit verschiedenen Substituenten versehener Alkylrest ist, wobei n = 2 bis 6, bevorzugt 3 bis 4 und m = 2 bis 100, bevorzugt 5 bis 50 ist. Beispiele sind lineare oder verzweigte Polyetherdiole, wie Poly(oxiethylen)glykole, Poly(oxipropylen)glykole und/oder Poly(oxibutylen)glykole. Die ausgewählten Polyetherdiole sollen keine übermäßigen Mengen an Ethergruppen einbringen, weil sonst die gebildeten Polymere in Wasser anquellen. Die bevorzugten Polyetherdiole sind Poly(oxipropylen)glykole im Molmassenbereich $\overline{M}n$ von 400 bis 3000. Polyesterdiole werden durch Veresterung von organischen Dicarbonsäuren oder ihren Anhydriden mit organischen Diolen hergestellt oder leiten sich von einer Hydroxicarbonsäure oder einem Lacton ab. Um verzweigte Polyesterpolyole herzustellen, können in geringem Umfang Polyole oder Polycarbonsäuren mit einer höheren Wertigkeit eingesetzt werden. Die Dicarbonsäuren und Diole können lineare oder verzweigte aliphatische, cycloaliphatische oder aromatische Dicarbonsäuren oder Diole sein.

Die zur Herstellung der Polyester verwendeten Diole bestehen beispielsweise aus Alkylenglykolen, wie Ethylenglykol, Propylenglykol, Butylenglykol, Butandiol-1,4, Hexandiol-1,6,Neopentylglykol und anderen Diolen, wie Dimethylcy- clohexan. Die Säurekomponente des Polyesters besteht in erster Linie aus niedermolekularen Dicarbonsäuren oder ihren Anhydriden mit 2 bis 30, bevorzugt 4 bis 18 Kohlenstoffatomen im Molekül. Geeignete Säure sind beispielsweise o-Phthalsäure, Isophthalsäure, Terephthalsäure, Tetrahydrophthalsäure, Cyclohexandicarbonsäure, Bernsteinsäure, Adipinsäure, Azelainsäure, Sebazinsäure, Maleinsäure, Fumarsäure, Glutarsäure, Hexachlorheptandicarbonsäure, Tetrachlorphthalsäure und/oder dimersisierte Fettsäuren. Anstelle dieser Säuren können auch ihre Anhydride, soweit diese existieren, verwendet werden. Bei der Bildung von Polyesterpolyolen können auch kleinere Mengen an Carbonsäuren mit 3 oder mehr Carboxylgruppen, beispielsweise Trimellithsäureanhydrid oder das Addukt von Maleinsäureanhydrid an ungesättigte Fettsäuren anwesend sein.

Erfindungsgemäß werden auch Polyesterdiole eingesetzt, die durch Umsetzung eines Lactons mit einem Diol erhalten werden. Sie zeichnen sich durch die Gegenwart einer endständigen Hydroxylgruppe und wie derkehrende Polyesteranteile der Formel $-(-CO-(CHR)_n-CH_2-0-)-$ aus. Hierbei ist n bevorzugt 4 bis 6 und der Substituent R Wasserstoff, ein Alkyl-, Cycloalkyl- oder Alkoxi-Rest. Kein Substituent enthält mehr als 12 Kohlenstoffatome. Die gesamte Anzahl der Kohlenstoffatome im Substituenten übersteigt nicht 12 pro Lactonring. Beispiele hierfür sind Hydroxicapronsäure, Hydroxibuttersäure, Hydroxidecansäure und/oder Hydroxistearinsäure. Das als Ausgangsmaterial verwendete Lacton kann durch die folgende allgemeine Formel dargestellt werden

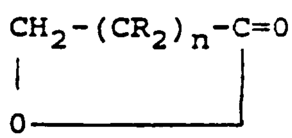

in der n und R die bereits angegebene Bedeutung haben.

Für die Herstellung der Polyesterdiole wird das unsubstituierte ε-caprolacton, bei dem n den Wert 4 hat und alle R-Substituenten Wasserstoff sind, bevorzugt. Die Umsetzung mit Lacton wird durch niedermolekulare Polyole, wie Ethylenglykol, 1,3-Propandiol, 1,4-Butandiol, Dimethylolcyclohexan gestartet. Es können jedoch auch andere Reaktionskomponenten, wie Ethylendiamin, Alkyldialkanolamine oder auch Harnstoff mit Caprolacton umgesetzt werden.

Als höhermolekulare Diole eigenen sich auch Polylactamdiole, die durch Reaktion von beispielsweise ε-Caprolactam mit niedermolekularen Diolen hergestellt werden.

Als typische multifunktionelle Isocyanate werden verwendet aliphatische, cycloaliphatische und/oder aromatische Polyisocyanate mit mindestens zwei Isocyanatgruppen pro Molekül. Bevorzugt werden die Isomeren oder Isomerengemische von organischen Diisocyanaten. Als aromatische Diisocyanate eignen sich Phenylendiisocyanat, Toluylendiisocyanat, Xylylendiisocyanat, Biphenylendiisocyanat, Naphthylendiisocyanat und Diphenylmethandiisocyanat.

Aufgrund ihrer guten Beständigkeit gegenüber ultraviolettem Licht ergeben (cyclo)aliphatische Diisocyanate Produkte mit geringer Vergilbungsneigung. Beispiele hierfür sind Isophorondiisocyanat, Cyclopentylendiisocyant sowie die Hydrierungsprodukte der aromatischen Diisocyanate, wie Cyclohexylendiisocyanat, Methylcyclohexylendiisocyanat und Dicyclohexylmethandiisocyanat. Als Beispiele für aliphatische Diisocyanate werden Trimethylendiisocyanat, Tetramethylendiisocyanat, Pentamethylendiisocyanat, Hexamethylendiisocyanat, Propylendiisocyanat, Ethylethylendiisocyanat, Dimethylethylendiisocyanat, Methyltrimethylendiisocyanat und Trimethylhexandiisocyanat genannt. Besonders bevorzugt werden als Diisocyanate Isophorondiisocyanat und Dicyclohexyl-methandiisocyanat genannt.

Die zur Bildung des Präpolymeren gebrauchte Polyisocyanat-Komponente kann auch einen Anteil höherwertiger Polyisocyanate enthalten, vorausgesetzt dadurch wird keine Gelbildung verursacht. Als Triisocyanate haben sich Produkte bewährt, die durch Trimerisation oder Oligomerisation von Diisocyanaten oder durch Reaktion von Diisocyanaten mit polyfunktionellen OH- oder NH-Gruppen enthaltenden Verbindungen entstehen. Hierzu gehören beispielsweise das Biuret von Hexamethylendiisocyanat und Wasser, das Isocyanurat des Hexamethylendiisocyanats oder das Addukt von Isophorondiisocyanat an Trimethylolpropan.

Die mittlere Funktionalität kann gegebenenfalls durch Zusatz von Monoisocyanaten gesenkt werden. Beispiele für solche kettenabbrechenden Monoisocyanate sind Phenylisocyanat, Cyclohexylisocyanat und Stearylisocyanat.

Polyurethane sind im allgemeinen nicht mit Wasser verträglich, wenn nicht bei ihrer Synthese spezielle Bestandteile eingebaut und/oder besondere Herstellungsschritte vorgenommen werden. So wird eine so große Säurezahl eingebaut, daß das neutralisierte Produkt stabil in Wasser zu dispergieren ist. Hierzu dienen Verbindungen, die zwei mit Isocyanatgruppen reagierende H-aktive Gruppen und mindestens eine zur Anionenbildung befähigte Gruppe enthalten. Geeignete, mit Isocyanatgruppen reagierende Gruppen, sind insbesondere Hydoxylgruppen sowie primäre und/oder sekundäre Aminogruppen. Gruppen, die zur Anionenbildung befähigt sind, sind Carboxyl-, Sulfonsäure- und/oder Phosphonsäuregruppen. Bevorzugt werden Carbonsäure- oder Carboxylatgruppen verwendet. Sie sollen so reaktionsträge sein, daß die Isocyanatgruppen des Diisocyanats vorzugsweise mit den anderen gegenüber Isocyanatgruppen reaktiven Gruppen des Moleküls reagieren. Es werden dazu Alkansäuren mit zwei Substituenten am α-ständigen Kohlenstoffatom eingesetzt. Der Substituent kann eine Hydroxylgruppe,

eine Alkylgruppe oder eine Alkylolgruppe sein. Diese Polyole haben wenigstens eine, im allgemeinen 1 bis 3 Carboxylgruppen im Molekül. Sie haben zwei bis etwa 25, vorzugsweise 3 bis 10 Kohlenstoffatome. Beispiele für solche Verbindungen sind Dihydroxipropionsäure, Dihydroxibernsteinsäure und Dihydroxibenzoesäure. Eine besonders bevorzugte Gruppe von Dihydroxialkansäuren sind die $\alpha,\alpha$-Dimethylolalkansäuren, die durch die Strukturformel $RC(CH_2OH)_2COOH$ gekennzeichnet sind, worin R=Wasserstoff oder eine Alkylgruppe mit bis zu etwa 20 Kohlenstoffatomen bedeutet. Beispiele für solche Verbindungen sind 2,2-Dimethylolessigsäure, 2,2-Dimethylolpropionsäure, 2,2-Dimethylolbuttersäure und 2,2-Dimethylolpentansäure. Die bevorzugte Dihydroxialkansäure ist 2,2-Dimethylolpropionsäure. Aminogruppenhaltige Verbindungen sind beispielsweise , -Diaminovaleriansäure, 3,4-Diaminobenzoesäure, 2,4-Diaminotoluolsulfonsäure und 2,4-Diamino-diphenylethersulfonsäure. Das Carboxylgruppen enthaltende Polyol kann 3 bis 100 Gew.-%, vorzugsweise 5 bis 50 Gew.-% des gesamten Polyolbestandteiles im NCO-Präpolymeren ausmachen.

Die durch die Carboxylgruppen-Neutralisation in Salzform verfügbare Menge an ionisierbaren Carboxylgruppen beträgt im allgemeinen wenigstens 0,4 Gew.-%, vorzugsweise wenigstens 0,7 Gew.-%, bezogen auf den Feststoff. Die obere Grenze beträgt etwa 6 Gew.-%. Die Menge an Dihydroxialkansäuren im unneutralisierten Präpolymeren ergibt eine Säurezahl von wenigstens 5, vorzugsweise wenigstens 10. Die obere Grenze der Säurezahl liegt bei 70, vorzugsweise bei 40 mg KOH/g, bezogen auf den Feststoff.

Diese Dihydroxialkansäure wird vor der Umsetzung mit Isocyanaten vorteilhafterweise mindestens anteilweise mit einem tertiären Amin neutralisiert, um eine Reaktion mit den Isocyanaten zu vermeiden.

Die erfindungsgemäß verwendeten NCO-Präpolymeren können durch gleichzeitige Umsetzung des Polyols oder Polyolgemisches mit einem Diisocyanat-Überschuß hergestellt werden. Andererseits kann die Umsetzung auch in vorgeschriebener Reihenfolge stufenweise vorgenommen werden.

Beispiele sind in den DE-OS-26 24 442 und DE-OS-32 10 051 beschrieben. Die Reaktionstemperatur beträgt bis zu 150°C, wobei eine Temperatur im Bereich von 50 bis 130°C bevorzugt wird. Die Umsetzung wird fortgesetzt, bis praktisch alle Hydroxylfunktionen umgesetzt sind.

Das NCO-Präpolymer enthält wenigstens etwa 0,5 Gew.-% Isocyanatgruppen, vorzugsweise wenigstens 1 Gew.-% NCO, bezogen auf Feststoff. Die obere Grenze liegt bei etwa 15 Gew.-%, vorzugsweise 10 Gew.-%, besonders bevorzugt bei 5 Gew.-%.

Die Umsetzung kann gegebenenfalls in Gegenwart eines Katalysators, wie Organozinnverbindungen und/oder tertiären Aminen durchgeführt werden. Um die Reaktionsteilnehmer in flüssigem Zustand zu halten und eine bessere Temperaturkontrolle während der Reaktion zu ermöglichen ist der Zusatz von organischen Lösemitteln, die keinen aktiven Wasserstoff nach Zerewitinoff enthalten, möglich. Verwendbare Lösemittel sind beispielsweise Dimethylformamid, Ester, Ether, wie Diethylenglykoldimethylether, Ketoester, Ketone, wie Methylethylketon und Aceton, mit Methoxigruppen substituierte Ketone, wie Methoxi-hexanon, Glykoletherester, chlorierte Kohlenwasserstoffe, aliphatische und alicyclische Kohlenwasserstoffpyrrolidone, wie N-Methylpyrrolidon, hydrierte Furane, aromatische Kohlenwasserstoffe und deren Gemische. Die Menge an Lösemittel kann in weiten Grenzen variieren und sollte zur Bildung einer Präpolymer-Lösung mit geeigneter Viskosität ausreichen. Meistens genügen 0,01 bis 15 Gew.-% Lösemittel, vorzugsweise 0,02 bis 8 Gew.-% Lösemittel, bezogen auf den Festkörper. Sieden die gegebenenfalls nicht wasserlöslichen Lösemittel niedriger als das Wasser, so können sie nach der Herstellung der harnstoffhaltigen Polyurethan-Dispersion durch Vakuumdestillation oder Dünnschichtverdampfung schonend aodestilliert werden.

Höhersiedende Lösemittel sollten wasserlöslich sein und verbleiben in der wäßrigen Polyurethan-Dispersion, um das Zusammenfließen der Polymer-Teilchen während der Filmbildung zu erleichtern. Besonders bevorzugt sind als Lösemittel N-Methylpyrrolidon, gegebenenfalls im Gemisch mit Ketonen, wie Methylethylketon.

Die anionischen Gruppen des NCO-Präpolymeren werden mit einem tertiären Amin mindestens teilweise neutralisiert. Die dadurch geschaffene Zunahme der Dispergierbarkeit in Wasser reicht für eine unendliche Verdünnbarkeit aus. Sie reicht auch aus, um das neutralisierte harnstoffgruppenhaltige Polyurethan beständig zu dispergieren. Geeignete tertiäre Amine sind beispielsweise Trimethylamin, Triethylamin, Dimethylethylamin, Diethylmethylamin, N-Methylmorpholin. Das NCO-Präpolymer wird nach der Neutralisation mit Wasser verdünnt und ergibt dann eine feinteilige Dispersion. Kurz danach werden die noch vorhandenen Isocyanatgruppen mit Diund/oder Polyaminen mit primären und/oder sekundären Aminogruppen als Kettenverlängerer umgesetzt. Diese Reaktion führt zu einer weiteren Verknüpfung und Erhöhung des Molekulargewichts. Die Konkurrenzreaktion zwischen Amin und Wasser mit dem Isocyanat muß, um optimale Eigenschaften zu erhalten, gut abgestimmt (Zeit, Temperatur, Konzentration) und für eine reproduzierbare Produktion gut überwacht werden. Als Kettenverlängerer werden wasserlösliche Verbindungen bevorzugt, weil sie die Dispergierbarkeit des polymeren Endproduktes in Wasser erhöhen. Bevorzugt werden Hydrazin und organische Diamine, weil sie in der Regel die höchste Molmasse aufbauen, ohne das Harz zu gelieren. Vorausssetzung hierfür ist jedoch, daß das Verhältnis der Aminogruppen zu den Isocyanatgruppen zweckentsprechend gewählt wird. Die Menge des Kettenverlängerers wird von seiner Funktionalität, vom NCO-Gehalt des Präpolymeren und von der Dauer der Reaktion bestimmt. Das Verhältnis der aktiven Wasserstoffatome im Kettenverlängerer zu den NCO-Gruppen im Präpolymeren sollte in der Regel geringer als 2 : 1 und vorzugsweise im Bereich von 1,0 : 1 bis 1,75 : 1 liegen. Die Anwesenheit von überschüssigem aktiven Wasserstoff, insbesondere in Form von primären Aminogruppen, kann zu Polymeren mit unerwünscht niedriger Molmasse führen.

Polyamine sind im wesentlichen Alkylen-Polyamine mit 1 bis 40 Kohlenstoffatomen, vorzugsweise etwa 2 bis 15 Kohlenstoffatomen. Sie können Substituenten tragen, die keine mit Isocyanat-Gruppen reaktionsfähige Wasserstoffatome haben. Beispiele sind Polyamine mit linearer oder verzweigter aliphatischer, cycloaliphatischer oder aromatischer Struktur und wenigstens zwei primären Aminogruppen. Als Diamine sind zu nennen Ethylendiamin, Propylendiamin, 1,4-Butylendiamin, Piperazin, 1,4-Cyclohexyldimethylamin, Hexamethylendiamin-1,6, Trimethylhexamethylendiamin, Methandiamin, Isophorondiamin, 4,4'-Diaminodicydohexylmethan und Aminoethylethanolamin. Bevorzugte Diamine sind Alkyl- oder Cycloalkyldiamine, wie Propylendiamin und 1-Amino-3-aminomethyl-3,5,5-trimethylcyclohexan.

Die Ketterverlängerung kann wenigstens teilweise mit einem Polyamin erfolgen, das mindestens drei Amingruppen mit einem reaktionsfähigen Wasserstoff aufweist. Dieser Polyamin-Typ kann in einer solchen Menge eingesetzt werden, daß nach der Verlängerung des Polymers nicht umgesetzte Aminstickstoffatome mit 1 oder 2 reaktionsfähigen Wasserstoffatomen vorliegen. Solche brauchbaren Polyamine sind Diethylentriamin, Triethylentetraamin, Dipropylentriamin und Dibutylentriamin. Bevorzugte Polyamine sind die Alkyl- oder Cycloalkyltriamine, wie Diethylentriamin. Um ein Gelieren bei der Kettenverlängerung zu verhindern, können auch kleine Anteil von Monoaminen, wie Ethylhexylamin zugesetzt werden.

Die erfindungsgemäß einzusetzenden wasserverdünnbaren Polyurethanharze und deren Herstellung werden auch in der EP-A-89497 und US-PS 4,719,132 beschrieben. Das in den bevorzugten wäßrigen Basisbeschichtungszusammensetzungen als filmbildendes Material enthaltene Emulsionspolymer oder Gemisch aus Emulsionspolymer und Polyurethanharz besteht aus 100 bis 40 Gew.-% Emulsionspolymer und 0 bis 60 Gew.-% Polyurethanharz, wobei sich die Mengenanteile jeweils auf den Festkörperanteil beziehen und ihre Summe stets 100 Gew.-% beträgt.

Die erfindungsgemäßen wäßrigen Basisbeschichtungszusammensetzungen können ggf. neben dem Emulsionspolymer bzw. dem Gemisch aus Emulsionspolymer und Polyurethanharz vorteilhafterweise noch weitere verträgliche wasserverdünnbare Kunstharze enthalten, wie z.B. Aminoplastharze, Polyester und Polyether, die im allgemeinen als Anreibeharze für die Pigments dienen. Die erfindungsgemäßen wäßrigen Basisbeschichtungszusammensetzungen können ggf. 5 bis 20 Gew.-%, bezogen auf den Gesamtfeststoffgehalt der Basisbeschichtungszusammensetzungen, eines wasserverdünnbaren Aminoplastharzes, vorzugsweise Melaminharz und 5 bis 20 Gew.-% eines wasserverdünnbaren Polyethers (z.B. Polypropylenglykol mit einem zahlenmittleren Molekulargewicht von 400 bis 900) enthalten. Es ist aber bevorzugt, den Basisbeschichtungszusammensetzungen kein Aminoplastharz zusetzen, da so die Schwitzwasserbeständigkeit der Beschichtungen erhöht wird.

Als Pigmente können die erfindungsgemäßen Basisbeschichtungszusammensetzungen farbgebende Pigmente auf anorganischer Basis, wie z.B. Titandioxid, Eisenoxid, Ruß usw., farbgebende Pigmente auf organischer Basis sowie übliche Metallpigmente (z.B. handelsübliche Aluminiumbronzen, Edelstahlbronzen...) und nicht-metallische Effektpigmente (z.B. Perlglanz bzw. Interferenzpigmente) enthalten. Die erfindungsgemäßen Basisbeschichtungszusammensetzungen enthalten vorzugsweise Metallpigmente und/oder Effektpigmente. Die Pigmentierungshöhe liegt in üblichen Bereichen, bevorzugt 0 bis 10 Gew.-%, bezogen auf das Gesamtgewicht der Basisbeschichtungszusammensetzung.

Weiterhin können den erfindungsgemäßen Basisbeschichtungszusammensetzungen vernetzte polymere Mikroteilchen, wie sie in der EP-A-38 127 offenbart sind und/oder übliche rheologische anorganische oder organische Additive in üblichen Mengen wie beispielsweise 0,05 bis 6 Gew.-% bezogen auf das Gesamtgewicht der Basisbeschichtungszusammensetzung zugesetzt werden.

So wirken als Verdicker beispielsweise anorganische Schichtsilikate, wie z. B. Aluminium-Magnesium-Silikate, Natrium-Magnesium-Schichtsilikate und Natrium-Magnesium-Fluor-Lithium-Schichtsilikate des Montmorillonit/-Typs, wasserlösliche Celluloseether, wie Hydroxiethylcellulose, Methylcellulose oder Carboximethylcellulose sowie synthetische Polymere mit ionischen und/oder assoziativ wirkenden Gruppen, wie Polyvinylalkohol, Poly(meth)acrylamid, Poly(meth)acrylsäure, Polyvinylpyrrolidon, Styrol-Maleinsäureanhydrid- oder Ethylen-Maleinsäureanhydrid-Copolymere und ihre Derivate oder auch hydrophob modifizierte ethoxilierte Urethane oder Polyacrylate. Besonders bevorzugt ist eine Kombination aus carboxylgruppenhaltigem Polyacrylat-Copolymer mit einer Säurezahl von 60 bis 780, bevorzugt 200 bis 500 mg KOH/g und einem Natrium-Magnesium-Schichtsilikat.

Besonders bevorzugte Basisbeschichtungszusammensetzungen mit verbesserter Schwitzwasserbeständigkeit der Beschichtungen werden erhalten, wenn das Natrium-Magnesium-Schichtsilikat in Form einer wäßrigen Paste eingesetzt wird. Besonders bevorzugte Pasten enthalten entweder 3 Gew.-% Schichtsilikat sowie 3 Gew.-% Polypropylenglykol oder 2 Gew.-% Schichtsilikat und 2 Gew.-% jeweils bezogen auf das

Gesamtgewicht der Paste anderer handelsüblicher oberflächenaktiver Substanzen.

Die erfindungsgemäßen Basisbeschichtungszusammensetzungen weisen im allgemeinen einen Festkörpergehalt von etwa 15 bis 50 Gew.-% auf. Der Festkörpergehalt variiert mit dem Verwendungszweck der Beschichtungszusammensetzungen. Für Metalliclacke liegt er beispielsweise bevorzugt bei 17 bis 25 Gew.-%. Für unifarbige Lacke liegt er höher beispielsweise bei 30 bis 45 Gew.-%.

Die erfindungsgemäßen Beschichtungszusammensetzungen können zusätzlich übliche organische Lösemittel enthalten. Deren Anteil wird möglichst gering gehalten. Er liegt beispielsweise unter 15 Gew.-%.

Die erfindungsgemäßen Basisbeschichtungszusammensetzungen werden im allgemeinen auf einen pH-Wert zwischen 6,5 und 9,0 eingestellt. Der pH-Wert kann mit üblichen Aminen, wie z.B. Ammoniak, Triethylamin, Dimethylaminoethanol und N-Methylmorpholin eingestellt werden. Mit der Bereitstellung der erfindungsgemäßen Basisbeschichtungszusammensetzungen wird die eingangs erläuterte Aufgabenstellung gelöst. Mit den erfindungsgemäßen Basisbeschichtungszusammensetzungen können auch ohne Überlackierung mit einer transparenten Deckbeschichtungszusammensetzung qualitativ hochwertige Überzüge hergestellt werden.

Die erfindungsgemäßen Basisbeschichtungszusammensetzungen können auf beliebige Substrate, wie z. B. Metall, Holz, Kunststoff oder Papier aufgebracht werden.

Nach einer kurzen Ablüftzeit von im allgemeinen mindestens 5 Minuten zur Bildung eines Polymerfilmes wird auf der so erhaltenen Basisschicht eine geeignete transparente Deckbeschichtungszusammensetzung aufgebracht. Als Decklack geeignet sind sowohl organisch gelöste als auch wäßrige 1- oder 2-Komponenten-Klarlacke. Häufig eingesetzt werden Klarlacke auf Basis eines hydroxylgruppenhaltigen Acrylatcopolymerisates und eines blockierten Polyisocyanates. Derartige Klarlacke sind beispielsweise in den Patentanmeldungen DE 34 12 534, DE 36 09 519, DE 37 31 652 und DE 38 23 005 beschrieben. Geeignet sind auch die in der internationalen Patentanmeldung mit der internationalen Veröffenllichungsnummer W088/02010 beschriebenen feuchtigkeitshärtenden Klarlacke auf Basis von Polyadditionspolymeren mit Alkoxi- oder Acryloxisilaneinheiten.

Nach einer ggf. erforderlichen Ablüftzeit von etwa 5 Minuten wird dann die Basisschicht zusammen mit der Deckschicht bei Temperaturen von 100 °C, bevorzugt von unter 80 °C getrocknet. Die Trockenfilmschichtdikken der Basischicht liegen i. a. zwischen 5 und 20 µm, die der Deckschicht i. a. zwischen 30 und 70 µm. Mit dem erfindingsgemäßen Verfahren gelingt es, auch im Bereich der Autoreparaturlackierung, d. h. bei Trocknung der Beschichtungen bei Temperaturen von unter 100 °C, Beschichtungen mit einem guten Metalleffekt, guter Haftung zum Füller, guter Haftung zwischem dem Basislack und Decklack, gutem Glanz und guter Beständigkeit im Schwitzwasserkonstantklima nach DIN 50017 zu erzielen.

In den folgenden Beispielen wird die Erfindung näher erläutert.

A. Herstellung der Emulsionspolymere

Emulsionspolymerdispersion 1

In einem zylindrischen Glasdoppelwandgefäß mit Rührer, Rückflußkühler, rührbarem Zulaufgefäß, Tropftrichter und Thermometer werden 1344 g deionisiertes Wasser und 12 g einer 30 %igen wäßrigen Lösung des Ammoniumsalzes des Penta(ethylenglykol)nonylphenylethersulfats (Fenopon® EP 110 der GAF Corp., Emulgator 1) vorgelegt und auf 82°C aufgeheizt. Im rührbaren Zulaufgefäß wird aus 720 g deionisiertem Wasser, 24 g Emulgator 1, 10,8 g Acrylamid, 864 g Methylmethacrylat und 216 g n-Butylmethacrylat eine Emulsion hergestellt. 30 Gew.-% dieser Emulsion werden zur Vorlage gegeben. Dann werden 28 Gew.-% einer Lösung von 3,1 g Ammoniumperoxodisulfat (APS) in 188 g deionisiertem Wasser innerhalb von 5 Minuten zugetropft. Es tritt eine exotherme Reaktion ein. Die Reaktionstemperatur wird zwischen 82 und 88°C gehalten. 15 Minuten nach Beendigung der Zugabe der Ammoniumperoxodisulfatlösung werden die restlichen 70 Gew.-% der Emulsion zusammen mit den restlichen 72 Gew.-% der Ammoniumperoxodisulfatlösung innerhalb einer Stunde zugegeben, wobei die Temperatur bei 85°C gehalten wird. Danach wird auf 82°C abgekühlt und innerhalb von 2 Stunden werden eine Mischung aus 842 g n-Butylacrylat, 108 g Hydroxipropylmethacrylat, 43 g Methylmethacrylat, 43,2 g Methacrylsäure, 32,4 g Acrylamid und 5,4 g Eikosa(ethylenglykol)nonylphenylether (Antarox® CO 850 der GAF Corp., Emulgator 2) sowie 343 g deionisiertes Wasser zugegeben. Nach Beendigung der Zugabe wird die Reaktionsmischung noch für 1,5 Stunden bei 85°C gehalten. Danach wird abgekühlt und die Dispersion über ein Gewebe mit 30 µm Maschenweite gegeben. Man erhält eine feinteilige Dispersion mit einem nichtflüchtigen Anteil von 45 Gew.-%, einem pH-Wert von 3,4, einer Säurezahl von 13 mg KOH/g und einer OH-Zahl von 20 mg KOH/g.

Emulsionspolymerdispersion 2

In einem zylindrischen Glasdoppelwandgefäß mit Rührer, Rückflußkühler, rührbarem Zulaufgefäß, Tropftrichter und Thermometer werden 1344 g deionisiertes Wasser und 12 g einer 40 %igen wäßrigen Lösung des Ammoniumsalzes des Penta(ethylenglykol)nonylphenylethersulfats (Fenopon® EP 110 der GAF Corp., Emulgator 1) vorgelegt und auf 80°C aufgeheizt. Im rührbaren Zulaufgefäß wird aus 720 g deionisiertem

Wasser, 24 g Emulgator 1, 10,8 g Acrylamid, 518 g Methylmethacrylat, 292 g n-Butylmethacrylat und 205 g Styrol eine Emulsion hergestellt.

30 Gew.-% dieser Emulsion werden zur Vorlage gegeben. Dann wird eine Lösung von 0,9 g Ammoniumperoxodisulfat (APS) in 55 g deionisiertem Wasser innerhalb von 5 Minuten zugetropft. Es tritt eine exotherme Reaktion ein. Die Reaktionstemperatur wird zwischen 80 und 85°C gehalten. 15 Minuten nach Beendigung der Zugabe der obengenannten APS-Lösung werden eine Lösung von 2,2 g APS in 480 g Wasser innerhalb von 3 Stunden und die restlichen 70 Gew.-% der obengenannten Emulsion innerhalb von einer Stunde zugegeben, wobei die Reaktionstemperatur bei 80°C gehalten wird. Nach Beendigung der Zugabe der Emulsion wird auf 77°C abgekühlt und innerhalb von 2 Stunden eine Mischung aus 745 g n-Butylacrylat, 119 g Methylmethacrylat, 108 g Hydroxipropylmethacrylat, 54 g Styrol, 42,7 g Ethylhexylacrylat, 42,7 g Methacrylsäure, 21,6 g Acrylamid und 2,2 g Emulgator 2 zugegeben. Nach Beendigung der Zugabe wird die Reaktionsmischung noch für 1,5 Stunden bei 80°C gehalten. Danach wird abgekühlt und die Dispersion über ein Gewebe mit 30 µm Maschenweite gegeben. Man erhält eine feinteilige Dispersion mit einem nichtflüchtigen Anteil von 45 Gew.-%, einen pH-Wert von 3,8, einer Säurezahl von 13 mg KOH/g und einer OH-Zahl von 19 mg KOH/g.

Emulsionspolymerdispersion 3

In einem zylindrischen Glasdoppelwandgefäß mit Rührer, Rückflußkühler, rührbarem Zulaufgefäß, Tropftrichter und Thermometer werden 1109 g deionisiertes Wasser und 10 g einer 30 %igen wäßrigen Lösung des Ammoniumsalzes des Penta(ethylenglykol)nonylphenylethersulfats (Fenopon® EP 110 der GAF Corp., Emulgator 1) vorgelegt und auf 82°C aufgeheizt. Im rührbaren Zulaufgefäß wird aus 748,2 g deionisiertem Wasser, 20,3 g Emulgator 1, 9,0 g Acrylamid, 718,1 g Methylmethacrylat und 179,5 g n-Butylmethacrylat eine Emulsion hergestellt. 30 Gew.-% dieser Emulsion werden zur Vorlage gegeben. Dann werden 10 Gew.-% einer Lösung von 7,2 g Ammoniumperoxodisulfat in 305 g deionisiertem Wasser innerhalb von 5 Minuten zugetropft. Es tritt eine exotherme Reaktion ein. Die Reaktionstemperatur wird zwischen 82 und 88°C gehalten. 15 Minuten nach Beendigung der Zugabe der Arnmoniumperoxodisulfatlösung werden die restlichen 70 Gew.-% der Emulsion zusammen mit den restlichen 90 Gew.-% der Ammoniumperoxodisulfatlösung innerhalb einer Stunde zugegeben, wobei die Temperatur bei 82°C gehalten wird. Danach wird innerhalb von 2 Stunden eine Mischung aus 700 g n-Butylacrylat, 89,8 g Hydroxipropylmethacrylat, 35,9 g Methylmethacrylat, 35,9 g Methacrylsäure, 26,9 g Acrylamid und 4,5 g Eikosa(ethylenglykol)nonylphenylether (Antarox® CO 850 der GAF Corp., Emulgator 2) zugegeben. Nach Beendigung der Zugabe wird die Reaktionsmischung noch für 1,5 Stunden bei 82°C gehalten. Danach wird abgekühlt und die Dispersion über ein Gewebe mit 30 µm Maschenweite gegeben. Man erhält eine feinteilige Dispersion mit einem nichtflüchtigen Anteil von 45 Gew.-%, einem pH-Wert von 2,5, einer Säurezahl von 14 mg KOH/g und einer OH-Zahl von 20 mg KOH/g.

Emulsionspolymerdispersion 4

In einem zylindrischen Glasdoppelwandgefäß mit Rührer, Ruckflußkühler, rührbarem Zulaufgefäß, Tropftrichter und Thermometer werden 1344 g deionisiertes Wasser und 12 g einer 30 %igen wäßrigen Lösung des Ammoniumsalzes des Penta(ethylenglykol)nonylphenylethersulfats (Fenopon® EP 110 der GAF Corp., Emulgator 1) vorgelegt und auf 82°C aufgeheizt. Im rührbaren Zulaufgefäß wird aus 477 g deionisiertem Wasser, 66,7 g Emulgator 1, 10,8 g Acrylamid, 864 g Methylmethacrylat und 216 g n-Butylmethacrylat eine Emulsion hergestellt. 30 Gew.-% dieser Emulsion werden zur Vorlage gegeben. Dann werden 3,6 Gew.-% einer Lösung von 8,6 g Ammoniumperoxodisulfat in 183 g deionisiertem Wasser innerhalb von 5 Minuten zugetropft. Es tritt eine exotherme Reaktion ein. Die Reaktionstemperatur wird zwischen 82 und 88°C gehalten.

15 Minuten nach Beendigung der Zugabe der Ammoniumperoxodisulfatlösung werden die restlichen 70 Gew.-% der Emulsion zusammen mit den restlichen 96,4 Gew.-% der Ammoniumperoxodisulfatlösung innerhalb einer Stunde zugegeben, wobei die Temperatur bei 82°C gehalten wird. Danach wird innerhalb von 2 Stunden eine Mischung aus 842 g n-Butylacrylat, 108 g Hydroxipropylmethacrylat, 43,2 g Methylmethacrylat, 43,2 g Acrylamidomethylpropansulfonsäure, 32,4 g Acrylamid, 66,7 g Emulgator 1 und 5,4 g Eikosa(ethylenglykol)nonylphenylether (Antarox® CO 850 der GAF Corp., Emulgator 2) zugegeben. Nach Beendigung der Zugabe wird die Reaktionsmischung noch für 1,5 Stunden bei 82°C gehalten. Danach wird abgekühlt und die Dispersion über ein Gewebe mit 30 µm Maschenweite gegeben. Man erhält eine feinteilige Dispersion mit einem nichtflüchtigen Anteil von 46 Gew.-%, einem pH-Wert von 2,5, einer Säurezahl von 6 mg KOH/g und einer OH-Zahl von 19 mg KOH/g.

Emulsionspolymerdispersion 5

In einem zylindrischen Glasdoppelwandgefäß mit Rührer, Rückflußkühler, rührbarem Zulaufgefäß, Tropftrichter und Thermometer werden 1344 g deionisiertes Wasser und 12 g einer 30 %igen wäßrigen Lösung des Ammoniumsalzes des Penta(ethylenglykol)nonylphenylethersulfats (Fenopon® EP 110 der GAF Corp., Emulgator 1) vorgelegt und auf 82°C aufgeheizt. Im rührbaren Zulaufgefäß wird aus 720 g deionisiertem Wasser, 24 g Emulgator 1, 43,2 g Acrylamid, 907 g Methylmethacrylat und 216 g n-Butylmethacrylat, 842 g n-Butylacrylat, 108 g Hydroxipropylmethacrylat, 43,2 g

Methacrylsäure und 5,4 g Emulgator 2 eine Emulsion hergestellt. 10 Gew.-% dieser Emulsion werden zur Vorlage gegeben. Dann wird eine Lösung von 0,87 g Ammoniumperoxodisulfat in 53 g deionisiertem Wasser innerhalb von 5 Minuten zugetropft. Es tritt eine exotherme Reaktion ein. Die Reaktionstemperaturwird zwischen 82 und 88°C gehalten. 15 Minuten nach Beendigung der Zugabe der APS-Lösung werden die restlichen 90 Gew.-% der Emulsion innerhalb von 3 Stunden und eine Lösung von 2,23 g APS in 478 g deionisiertem Wasser innerhalb von 3,5 Stunden zugegeben, wobei die Temperatur bei 82°C gehalten wird.

Nach Beendigung der Zugabe wird die Reaktionsmischung noch für 1,5 Stunden bei 82°C gehalten. Danach wird abgekühlt und die Dispersion über ein Gewebe mit 30 µm Maschenweite gegeben. Man erhält eine feinteilige Dispersion mit einem nichtflüchtigen Anteil von 45 Gew.-%, einem pH-Wert von 5,8, einer Säurezahl von 13 mg KOH/g und einer OH-Zahl von 20 mg KOH/g.

B Herstellung der erfindungsgemäß eingesetzten Polyurethanharze

Polyurethanharzdispersion 1

570 g eines handelsüblichen aus Caprolacton und Ethylenglykol hergestellten Polyesters mit einer Hydroxylzahl von 196 mg KOH/g werden bei 100°C 1 Stunde im Vakuum entwässert. Bei 80°C werden 524 g 4,4'-Dicyclohexylmethandiisocyanat zugegeben und bei 90°C solange gerührt, bis der Isocyanatgehalt 7,52 Gew.-%, bezogen auf die Gesamteinwaage, beträgt. Nach Abkühlen auf 60°C wird eine Lösung von 67 g Dimethylolpropionsäure und 50 g Triethylamin in 400 g N-Methylpyrrolidon zugegeben und 1 Stunde bei 90°C gerührt. Die erhaltene Masse wird unter intensivem Rühren in 1840 g kaltes deionisiertes Wasser gegeben. Zu der erhaltenen Dispersion werden unter intensivem Rühren innerhalb von 20 Minuten 86 g einer 15 %igen Hydrazinlösung zugegeben. Die resultierende, sehr feinteilige Dispersion hat einen Festkörpergehalt von 35 % und eine Auslaufzeit von 27 Sekunden im DIN-Becher 4.

Polyurethanharzdispersion 2

830 g eines Polyesters aus Neopentylglykol, Hexandiol-1,6 und Adipinsäure mit einer Hydroxylzahl von 135 mg KOH/g und einer Säurezahl unter 3 mg KOH/g werden bei 100°C 1 Stunde im Vakuum entwässert. Bei 80°C werden 524 g 4,4'-Dicydohexylmethandiisocyanat zugegeben und bei 90°C gerührt, bis der Gehalt an freien Isocyanatgruppen 6,18 Gew.-%, bezogen auf die Gesamteinwaage, beträgt. Nach Abkühlung auf 60°C wird eine Lösung von 67 g Dimethylpropionsäure und 50 g Triethylamin in 400 g N-Methylpyrrolidon zugegeben und 1 Stunde bei 90°C gerührt.

Die erhaltene Masse wird unter intensivem Rühren in 2400 g kaltes deionisiertes Wasser gegeben. Man erhält eine feinteilige Dispersion. Zu dieser Dispersion werden unter intensivem Rühren innerhalb von 20 Minuten 80 g einer 30 %igen wäßrigen Lösung von Ethylendiamin zugegeben. Die resultierende, sehr feinteilige Dispersion hat einen Festkörpergehalt von 35 % und eine Auslaufzeit von 23 Sekunden im DIN-Becher 4.

C Herstellung von Basisbeschichtungszusammensetzungen

8,0 g Butylglykol und 4,5 g einer Aluminiumbronze gemäß DE-OS-36 36 183 (Aluminiumgehalt: 60 Gew.-%) werden mit einem Schnellrührer 15 Minuten bei 300-500 U/min. gerührt. Es wird eine Mischung 1 erhalten.

50 g Emulsionspolymerdispersion 1, 2, 3 oder 4 werden mit Ammoniak auf einen pH-Wert von 6,9 eingestellt und mit 9,4 g einer 3,5 %igen Lösung eines handelsüblichen Polyacrylsäureverdickers (Viscalex® HV 30 der Firma Allied Colloids, ph-Wert: 8,0 sowie 0,5 g eines handelsüblichen Entschäumers (BYK® 035) versetzt. Es wird die Mischung 2 enthalten.

Zur Herstellung der erfindungsgemäßen Basislacke werden die Mischungen 1 und 230 Minuten bei 800-1000 U/min gemischt und danach gegebenenfalls durch Zusatz einer 25%igen wäßrigen Ammoniaklösung auf einen pH-Wert von 7,0 eingestellt. Zu dieser Mischung wird 60g einer vorgequollenen wäßrigen Paste, enthaltend 2 Gew.-% eines anorganischen Natrium-Magnesiumschichtsilikat-Verdickungsmittels und 2 Gew.-%, bezogen auf das Gewicht der Paste, Polypropylenglykol (zahlenmittleres Molekulargewicht = 900) unter Rühren zugesetzt. Anschließend wird die Viskosität durch Zugabe von deionisiertem Wasser auf eine Auslaufzeit von 16-25 sec. im DIN 4-Becher eingestellt.

Es werden die erfindungsgemäßen Basisbeschichtungszusammensetzungen BB1, BB2, BB3 und BB4 erhalten.

Die Basisbeschichtungszusammensetzung BB5 wird erhalten, indem in die Mischung 2 10 g der Polyurethanharzdispersion 1 eingearbeitet werden.

Die so erhaltenen Basisbeschichtungszusammensetzungen zeigen ausgezeichnete Lagerstabilitäten.

Die Basisbeschichtungszusammensetzungen werden nach gut bekannten Methoden auf mit einer handelsüblichen Elektrotauchlackierung und einem handelsüblichen konventionellen (d. h. lösemittelhaltigem oder wasserhaltigem) Füller beschichtete phoshatierte Stahlbleche (Bonder 132) gespritzt, nach einer Ablüftzeit von 30 Minuten mit einem handelsüblichen konventionellen 2-Komponenten-Klarlack auf Basis eines hydroxylgruppenhaltigen Acrylatcopolymerisates und eines Isocynatvernetzers überlackiert und 30 min. bei 60 °C getrocknet. Die Trockenfilmschichtdicke der Basisbeschichtungszusammensetzung beträgt 15 µm, die des Klarlackes 50 µm.

Die so erhaltene Metalleffektlackierungen zeigen einen guten Metalleffekt, gute Haftung zum Füller, gute Haftung zwischen Basislack und Decklack, guter Glanz und gute Beständigkeit im Schwitzwasserkonstantklima nach DIN 50 017.

Vergleichsbeispiel

Eine gemäß obiger Beschreibung unter Verwendung der Emulsionspolymerdispersion 5 hergestellten Basisbeschichtungszusammensetzung zeigt eine unzureichende Lagerstabilität.

**Patentansprüche**

1. Verwendung eines mehrschichtigen schützenden und/oder dekorativen Überzugs auf einer Substratoberfläche zur Autoreparaturlackierung, bei der

   (1) als Basisbeschichtungszusammensetzung eine pigmentierte wäßrige Beschichtungszusammensetzung, die als filmbildendes Material ein wasserverdünnbares Emulsionspolymer enthält, auf die Substratoberfläche aufgebracht wird,

   (2) aus der in Stufe (1) aufgebrachten Zusammensetzung ein Polymerfilm gebildet wird,

   (3) auf der so erhaltenen Basisschicht eine geeignete transparente Deckbeschichtungszusammensetzung aufgebracht wird und anschließend

   (4) die Basisschicht zusammen mit der Deckschicht bei Temperaturen von unter 100° C getrocknet wird, **dadurch gekennzeichnet, daß**
   die Basisbeschichtungszusammensetzung ein wasserverdünnbares Emulsionspolymer enthält, das erhältlich ist, indem

   (a) in einer ersten Stufe 10 bis 90 Gewichtsteile eines ethylenisch ungesättigten Monomeren oder eines Gemisches aus ethylenisch ungesättigten Monomeren in wäßriger Phase in Gegenwart eines oder mehrerer Emulgatoren und eines oder mehrerer radikalbildender Initiatoren polymerisiert werden, wobei das ethylenisch ungesättigte Monomer bzw. das Gemisch aus ethylenisch ungesättigten Monomeren so ausgewählt wird, daß in der ersten Stufe ein Polymer mit einer Glasübergangstemperatur TG1) von + 30 bis + 110° C erhalten wird und
   (b) nachdem mindestens 80 Gew.-% des in der ersten Stufe eingesetzten ethylenisch ungesättigten Monomers bzw. Monomerengemisches umgesetzt worden sind, in einer zweiten Stufe 90 bis 10 Gewichtsteile eines ethylenisch ungesättigten Monomeren oder eines Gemisches aus ethylenisch ungesättigten Monomeren in Gegenwart des in der ersten Stufe erhaltenen Polymers polymerisiert werden, wobei das in der zweiten Stufe eingesetzte Monomer bzw. das in der zweiten Stufe eingesetzte Gemisch aus ethylenisch ungesättigten Monomeren so ausgewählt wird, daß eine alleinige Polymerisation des in der zweiten Stufe eingesetzten Monomers bzw. des in der zweiten Stufe eingesetzten Gemisches aus ethylenisch ungesättigten Monomeren zu einem Polymer mit einer Glasübergangstemperatur (TG2) von - 60 bis + 20°C führen würde und wobei die Reaktionsbedingungen so gewählt werden, daß das erhaltene Emulsionspolymer eine zahlenmittlere Molmasse von 200.000 bis 2.000.000 aufweist und wobei das in der ersten Stufe eingesetzte ethylenisch ungesättigte Monomer bzw. Monomerengemisch und das in der zweiten Stufe eingesetzte ethylenisch ungesättigte Monomer bzw. Monomerengemisch in Art und Menge so ausgewählt werden, daß das erhaltene Emulsionspolymer eine Hydroxylzahl von 2 bis 1 00 aufweist und die Differenz TG1 - TG2 10 bis 170°C beträgt.

2. Verwendung nach Anspruch 1,
   **dadurch gekennze1chnet,** daß die Basisschicht zusammen mit der Deckschicht bei Temperaturen von unter 80° C getrocknet wird.

3. Verwendung nach Anspruch 1 oder 2,
   **dadurch gekennze1chnet,** daß die Basisbeschichtungszusammensetzung ein Metallpigment, vorzugsweise Aluminiumpigment, enthält.

4. Verwendung nach Anspruch 1 bis 3,
   **dadurch gekennzeichnet,** daß das filmbildende Material aus 100 bis 40 Gew.-% des Emulsionspolymeren und 0 bis 60 Gew.-% eines wasserverdünnbaren Polyurethanharzes besteht, wobei sich die Mengenanteile jeweils auf den Festkörperanteil beziehen und ihre Summe stets 100 Gew.-% beträgt.

5. Verwendung nach einem der Ansprüche 1 bis 4,
   **dadurch gekennzeichnet**, daß in der ersten Stufe ein Gemisch aus

   (a1) 100 bis 60, vorzugsweise 99,5 bis 75

Gew.-% eines cycloaliphatischen oder aliphatischen Esters der Methacrylsäure oder Acrylsäure oder eines Gemisches aus solchen Estern und

(a2) 0 bis 40, vorzugsweise 0,5 bis 25 Gew.-% eines mit (a1) copolymerisierbaren Monomeren oder eines Gemisches aus solchen Monomeren eingesetzt wird, wobei die Summe der Gewichtsanteile von (a1) und (a2) stets 100 Gew.-% ergibt.

**6.** Verwendung nach einem der Ansprüche 1 bis 5, **dadurch gekennzeichnet**, daß in der zweiten Stufe ein Gemisch aus

(b1) 47 bis 99, vorzugsweise 75 bis 90 Gew.-% eines cycloaliphatischen oder aliphatischen Esters der Methacrylsäure oder Acrylsäure oder eines Gemisches aus solchen Estern,

(b2) 1 bis 20, vorzugsweise 5 bis 15 Gew.-% eines mindestens eine Hydroxylgruppe tragenden mit (b1), (b3) und (b4) copolymerisierbaren Monomeren oder eines Gemisches aus solchen Monomeren,

(b3) 0 bis 8, vorzugsweise 2 bis 6 Gew.-% eines mindestens eine Carboxyloder Sulfonsäuregruppe tragenden mit (b1), (b2) und (b4) copolymerisierbaren Monomeren oder eines Gemisches aus solchen Monomeren und

(b4) 0 bis 25, vorzugsweise 2 bis 15 Gew.-% eines weiteren mit (b1), (b2) und (b3) copolymerisierbaren Monomeren oder eines Gemisches aus solchen Monomeren

eingesetzt wird, wobei die Summe der Gewichtsanteile von (b1), (b2), (b3) und (b4) stets 100 Gew.-% ergibt.

**7.** Verwendung nach einem der Ansprüche 1 bis 6, **dadurch gekennzeichnet,** daß die transparente Deckbeschichtungszusammensetzung ein hydroxylgruppenhaltiges Acrylatcopolymerisat und ein blockiertes Di- und/oder Polyisocyanat enthält.

## Claims

**1.** Use of a multicoat protective and/or decorative coating on a substrate surface for automotive refinishing, in which

(1) a pigmented aqueous coating composition containing as the film-forming material a water-thinnable emulsion polymer is applied to the substrate surface as the basecoat coating composition,

(2) a polymeric film is formed from the composition applied in stage (1),

(3) a suitable transparent topcoat coating composition is applied to the basecoat obtained in this manner and subsequently

(4) the basecoat together with the topcoat is dried at temperatures below 100°C,

characterised in that the basecoat coating composition contains a water-thinnable emulsion polymer which is obtainable in that

(a) in a first stage 10 to 90 parts by weight of an ethylenically unsaturated monomer or a mixture of ethylenically unsaturated monomers are polymerised in the aqueous phase in the presence of one or more emulsifiers and one or more radical-forming initiators, the ethylenically unsaturated monomer or the mixture of ethylenically unsaturated monomers being chosen such that in the first stage a polymer having a glass transition temperature TG1) of + 30 to + 110°C is obtained, and

(b) after at least 80% by weight of the ethylenically unsaturated monomer or mixture of monomers employed in the first stage have reacted, in a second stage 90 to 10 parts by weight of an ethylenically unsaturated monomer or a mixture of ethylenically unsaturated monomers are polymerised in the presence of the polymer obtained in the first stage, the monomer employed in the second stage or the mixture of ethylenically unsaturated monomers employed in the second stage being chosen such that a sole polymerisation of the monomer employed in the second stage or of the mixture of ethylenically unsaturated monomers employed in the second stage would give rise to a polymer having a glass transition temperature (TG2) of - 60 to + 20°C, and the reaction conditions being chosen such that the resultant emulsion polymer has a number average molecular weight of 200,000 to 2,000,000, and the nature and amount of the ethylenically unsaturated monomer or mixture of monomers employed in the first stage and the ethylenically unsaturated monomer or mixture of monomers employed in the second stage being chosen such that the resultant emulsion polymer has a hydroxyl value of 2 to 100 [lacuna] and the difference TG1 - TG2 is 10 to 170°C.

**2.** Use according to Claim 1, characterised in that the basecoat together with the topcoat is dried at temperatures below 80°C.

3. Use according to Claim 1 or 2, characterised in that the basecoat coating composition contains a metal pigment, preferably aluminium pigment.

4. Use according to Claim [sic] 1 to 3, characterised in that the film-forming material consists of 100 to 40% by weight of the emulsion polymer and 0 to 60% by weight of a water-thinnable polyurethane resin, the amounts in each case being based on the solids content and their total being always 100% by weight.

5. Use according to one of Claim 1 to 4, characterised in that in the first stage a mixture is used consisting of

(a1) 100 to 60, preferably 99.5 to 75% by weight of a cycloaliphatic or aliphatic ester of methacrylic acid or acrylic acid or a mixture of such esters and
(a2) 0 to 40, preferably 0.5 to 25% by weight of a monomer which is copolymerisable with (a1) or a mixture of such monomers, the total of the weights of (a1) and (a2) being always 100% by weight.

6. Use according to one of Claims 1 to 5, characterised in that in the second stage a mixture is used consisting of

(b1) 47 to 99, preferably 75 to 90% by weight of a cycloaliphatic or aliphatic ester of methacrylic acid or acrylic acid or a mixture of such esters,
(b2) 1 to 20, preferably 5 to 15% by weight of a monomer which is copolymerisable with (b1), (b3) and (b4) and carries at least one hydroxyl group or a mixture of such monomers,
(b3) 0 to 8, preferably 2 to 6% by weight of a monomer which is copolymerisable with (b1), (b2) and (b4) and carries at least one carboxyl or sulphonic acid group or a mixture of such monomers and
(b4) 0 to 25, preferably 2 to 15% by weight of a further monomer which is copolymerisable with (b1), (b2) and (b3) or a mixture of such monomers,

the total of the weights of (b1), (b2), (b3) and (b4) being always 100% by weight.

7. Use according to one of Claims 1 to 6, characterised in that the transparent topcoat coating composition contains a hydroxyl-containing acrylate copolymer and a blocked diisocyanate and/or polyisocyanate.

**Revendications**

1. Utilisation d'un revêtement multicouche protecteur et/ou décoratif sur une surface d'un substrat, pour peindre des réparations effectuées sur des automobiles, dans laquelle :

(1) une composition de revêtement aqueuse pigmentée, qui contient un polymère en émulsion diluable dans l'eau comme matériau filmogène, est appliquée sur la surface du substrat comme composition de revêtement de base;
(2) un film polymère est formé sur la composition appliquée dans l'étape (1);
(3) une composition appropriée de recouvrement transparente est appliquée sur la couche de base ainsi obtenue, puis
(4) la couche de base et la couche de recouvrement sont séchées ensemble à des températures inférieures à 100°C, caractérisée en ce que

la composition de revêtement de base contient un polymère en émulsion diluable dans l'eau, qui peut être obtenu :

(a) en polymérisant en phase aqueuse, dans une première étape, 10 à 90 parties en poids d'un monomère éthyléniquement insaturé ou d'un mélange de monomères éthyléniquement insaturés, en présence d'un ou plusieurs émulsifiants et d'un ou plusieurs initiateurs radicalaires, le monomère éthyléniquement insaturé ou le mélange de monomères éthyléniquement insaturés étant choisis de telle sorte que l'on obtient, dans la première étape, un polymère ayant une température de transition vitreuse ($T_{G1}$) de +30 à +110°C, et
(b) après qu'au moins 80% en poids du monomère éthyléniquement insaturé ou du mélange de monomères éthyléniquement insaturés utilisé dans la première étape ont réagi, on polymérise, dans une deuxième étape, 90 à 10 parties en poids d'un monomère éthyléniquement insaturé ou d'un mélange de monomères éthyléniquement insaturés, en présence du polymère obtenu dans la première étape, le monomère utilisé dans la deuxième étape ou le mélange de monomères éthyléniquement insaturés utilisé dans la deuxième étape étant choisi de telle sorte qu'une polymérisation unique du monomère utilisé dans la deuxième étape ou du mélange de monomères éthyléniquement insaturés utilisé dans la deuxième étape conduise à un polymère ayant une température de transition Vitreuse ($T_{G2}$) de -60 à +20°C, et les conditions de la réaction étant choisies de telle sorte que le polymère en

émulsion obtenu présente une masse molaire moyenne en nombre de 200 000 à 2 000 000, et le monomère ou mélange de monomères éthyléniquement insaturés utilisés dans la première étape et le monomère ou mélange de monomères éthyléniquement insaturés utilisés dans la deuxième étape étant choisis d'un type et dans des quantités telles que le polymère en émulsion obtenu présente un indice d'hydroxyle de 2 à 100 et que la différence TG1 - TG2 vaille 10 à 170°C.

**2.** Utilisation suivant la revendication 1, caractérisée en ce que la couche de base et la couche de recouvrement sont séchées ensemble à des températures inférieures à 80°C.

**3.** Utilisation suivant la revendication 1 ou 2, caractérisée en ce que la composition de revêtement de base contient un pigment métallique, de préférence un pigment d'aluminium.

**4.** Utilisation suivant l'une quelconque des revendications 1 à 3,
caractérisée en ce que le matériau filmogène est composé de 100 à 40% en poids du polymère en émulsion et de 0 à 60% en poids d'une résine de polyuréthanne diluable dans l'eau, les rapports de quantités se référant dans chaque cas à la fraction de matière solide et leur somme valant toujours 100% en poids.

**5.** Utilisation suivant l'une quelconque des revendications 1 à 4, caractérisée en ce que, dans la première étape, on utilise un mélange de

(a1) 100 à 60, de préférence 99,5 à 75% en poids d'un ester cycloaliphatique ou aliphatique de l'acide méthacrylique ou acrylique ou d'un mélange de ces esters, et
0 à 40, de préférence 0,5 à 25% en poids d'un monomère copolymérisable avec (a1) ou d'un mélange de ces monomères, la somme des fractions en poids de (a1) et (a2) donnant toujours 100% en poids.

**6.** Utilisation suivant l'une quelconque des revendications 1 à 5, caractérisée en ce que, dans la deuxième étape, on utilise un mélange de

(b1) 47 à 99, de préférence 75 à 90% en poids d'un ester cycloaliphatique ou aliphatique de l'acide méthacrylique ou de l'acide acrylique ou d'un mélange de tels esters;
(b2) 1 à 20, de préférence 5 à 15% en poids d'un monomère portant au moins un groupe hydroxyle, copolymérisable avec (b1), (b3) et (b4), ou d'un mélange de tels monomères;
(b3) 0 à 8, de préférence 2 à 6% en poids d'un monomère portant au moins un groupe acide carboxylique ou sulfonique, copolymérisable avec (b1), (b2) et (b4), ou d'un mélange de tels monomères, et
(b4) 0 à 25, de préférence 2 à 15% en poids d'un autre monomère copolymérisable avec (b1), (b2) et (b3) ou d'un mélange de tels monomères,

la somme des fractions en poids de (b1), (b2), (b3) et (b4) valant toujours 100% en poids.

**7.** Utilisation suivant l'une quelconque des revendications 1 à 6,
caractérisée en ce que la composition de recouvrement transparente contient un copolymère d'acrylate contenant des groupes hydroxyle et un di- et/ou polyisocyanate bloqué.